# FASCICULE DE BREVET EUROPEEN

(11) **EP 4 198 557 B1**
(45) Date de publication et mention de la délivrance du brevet: **13.03.2024**
(21) Numéro de dépôt: 22212822.5
(22) Date de dépôt: 12.12.2022
(51) Int. Cl.: G01S 7/4912, G01S 7/4915, G01S 17/34, G01S 17/894

(54) **SYSTÈME D'IMAGERIE ACTIVE**
AKTIVES ABBILDUNGSSYSTEM
ACTIVE IMAGING SYSTEM

(30) Priorité: 20.12.2021 FR 2113965
(43) Date de publication de la demande: 21.06.2023
(73) Titulaire: Commissariat à l'énergie atomique et aux énergies alternatives, 75015 Paris (FR)
(72) Inventeur: SEGURA PUCHADES, Josep, 38054 GRENOBLE CEDEX 09 (FR); DAAMI, Anis, 38054 GRENOBLE CEDEX 09 (FR); FREY, Laurent, 38054 GRENOBLE CEDEX 09 (FR)
(74) Mandataire: Cabinet Beaumont

(56) Documents cités:
- WO-A1-2021/144357
- US-A1- 2021 063 573

## Description

### Domaine technique

La présente description concerne de façon générale le domaine de l'imagerie active, et notamment le domaine de l'imagerie de scène en trois dimensions.

### Technique antérieure

Un système d'imagerie active comprend classiquement une source lumineuse configurée pour illuminer la scène à observer, et un capteur d'images agencé pour recevoir un faisceau lumineux émis par la source et réfléchi par la scène. On s'intéresse ici plus particulièrement à des systèmes d'imagerie active dans lesquels le capteur est adapté à déterminer des valeurs de profondeur, et éventuellement de vitesse, de la scène observée, par exemple en vue d'obtenir une cartographie de profondeur, et éventuellement de vitesse, de la scène.

On s'intéresse ici plus particulièrement aux systèmes d'imagerie active à onde continue modulée en fréquence (FMCW - de l'anglais "Frequency-Modulated Continuous Wave"), aussi appelés lidar FMCW.

Dans un tel système la source lumineuse est une source cohérente, par exemple une source laser, émettant un rayonnement modulé en fréquence, par exemple selon une rampe linéaire périodique. Le rayonnement émis par la source est divisé en un faisceau de référence et un faisceau objet. Le faisceau de référence est envoyé vers le capteur d'images sans passer par la scène, le faisceau objet est projeté sur la scène où il est réfléchi ou rétrodiffusé en direction du capteur. Le faisceau de référence et le faisceau objet réfléchi par la scène interfèrent sur le capteur d'images. Les interférences produisent sur chaque pixel du capteur d'images un battement dont la fréquence est représentative du retard entre les deux faisceaux, et donc de la profondeur du point de la scène vu par le pixel.

La demande de brevet WO2021144357A1 précédemment déposée par le demandeur décrit un exemple de réalisation d'un tel système.

Il serait souhaitable d'améliorer au moins en partie certains aspects des systèmes d'imagerie active connus. En particulier, il serait souhaitable, dans un système d'imagerie FMCW du type décrit dans la demande de brevet WO2021144357A1, de pouvoir simplifier l'électronique utilisée pour mesurer la fréquence de battement du faisceau hétérodyne reçu par les pixels du capteur d'images.

### Résumé de l'invention

Pour cela, un mode de réalisation prévoit un capteur d'images comprenant une pluralité de pixels comprenant chacun un photodétecteur élémentaire, le capteur comprenant, pour chaque pixel, un circuit de détection d'une fréquence de battement d'une portion d'un faisceau hétérodyne reçue par le photodétecteur élémentaire du pixel, le circuit de détection comprenant un comparateur de fréquence comprenant un premier noeud d'entrée recevant un premier signal alternatif périodique de fréquence égale à ladite fréquence de battement, un deuxième noeud d'entrée recevant un deuxième signal alternatif de fréquence variable, et un noeud de sortie fournissant un signal de sortie commutant d'un premier état à un deuxième état lorsque la fréquence du deuxième signal dépasse la fréquence du premier signal.

Selon un mode de réalisation, le capteur comprend un circuit de génération du deuxième signal, commun à tous les pixels du capteur.

Selon un mode de réalisation, le circuit de génération du deuxième signal comprend un oscillateur à commande numérique fournissant le deuxième signal, et un compteur numérique générant un signal de commande de l'oscillateur à commande numérique.

Selon un mode de réalisation, le capteur comprend, pour chaque pixel, un registre numérique commandé par le signal de sortie du comparateur de fréquence du pixel et configuré pour mémoriser la valeur du signal de commande de l'oscillateur à commande numérique lors de la commutation du signal de sortie du comparateur de fréquence du pixel.

Selon un mode de réalisation, le capteur comprend en outre un circuit d'adressage et de lecture des registres numériques des pixels.

Selon un mode de réalisation, chaque pixel comprend un circuit de détection de ladite fréquence de battement, le capteur comprenant des circuits de détection évènementielle des commutations des signaux de sortie des comparateurs de fréquence des pixels, lesdits circuits étant configurés pour, à chaque commutation du signal de sortie du comparateur de fréquence d'un pixel, décoder l'adresse du pixel dans lequel la commutation s'est produite, et écrire dans un circuit mémoire ladite adresse ainsi que la valeur du signal de commande de l'oscillateur à commande numérique au moment de la commutation.

Selon un mode de réalisation, le circuit de génération du deuxième signal comprend un oscillateur à commande en tension fournissant le deuxième signal, et un circuit de génération d'une tension de commande de l'oscillateur à commande en tension.

Selon un mode de réalisation, le capteur comprend, pour chaque pixel, un circuit d'échantillonnage commandé par le signal de sortie du comparateur de fréquence et configuré pour mémoriser la valeur de la tension de commande de l'oscillateur à commande en tension lors de la commutation du signal de sortie du comparateur de fréquence.

Selon un mode de réalisation, le capteur comprend, pour chaque pixel, un circuit d'amplification et de filtrage d'un signal électrique fourni par le photodétecteur du pixel, et un circuit de quantification sur 1-bit d'une composante alternative d'un signal de sortie du circuit d'amplification et de filtrage, ledit circuit de quantification fournissant le premier signal alternatif périodique appliqué sur le premier noeud d'entrée du comparateur de fréquence du pixel.

Un autre mode de réalisation prévoit un système d'imagerie comprenant :
- un capteur d'images tel que défini ci-dessus ;
- une source laser configurée pour émettre un faisceau lumineux modulé en fréquence ;
- un séparateur optique configuré pour séparer le faisceau laser émis par la source en un faisceau de référence et un faisceau objet dirigé vers une scène à analyser ; et
- un montage optique configuré pour projeter ou acheminer sur le capteur d'images un faisceau recombiné formé par la superposition du faisceau de référence et du faisceau objet réfléchi par la scène.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 représente de façon très simplifiée un exemple d'un système d'imagerie active selon un mode de réalisation ;
la figure 2 représente de façon schématique, sous forme de blocs, une partie d'un circuit d'un pixel d'un capteur d'images du système de la figure 1 ;
la figure 3 représente de façon schématique, sous forme de blocs, une autre partie des circuits du capteur d'images du système de la figure 1 ;
la figure 4 représente plus en détail un exemple de réalisation d'un comparateur de fréquence d'un pixel du capteur d'images du système de la figure 1 ;
la figure 5 est une vue d'ensemble très schématique des circuits du capteur d'images du système de la figure 1 ;
la figure 6 représente de façon schématique, sous forme de blocs, une partie des circuits du capteur d'images du système de la figure 1 selon une première variante de réalisation ;
la figure 7 représente de façon schématique, sous forme de blocs, une partie des circuits du capteur d'images du système de la figure 1 selon une deuxième variante de réalisation ; et
la figure 8 représente plus en détail un exemple de réalisation des circuits de la figure 2.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés. En particulier, la réalisation des différents éléments des systèmes décrits n'a pas été détaillée, la réalisation de ces éléments étant à la portée de la personne du métier à partir des indications de la présente description. En outre, les diverses applications que peuvent avoir les systèmes d'imagerie et les capteurs décrits n'ont pas été détaillées.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais "coupled") entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Sauf précision contraire, les expressions "environ", "approximativement", "sensiblement", et "de l'ordre de" signifient à 10 % près, de préférence à 5 % près.

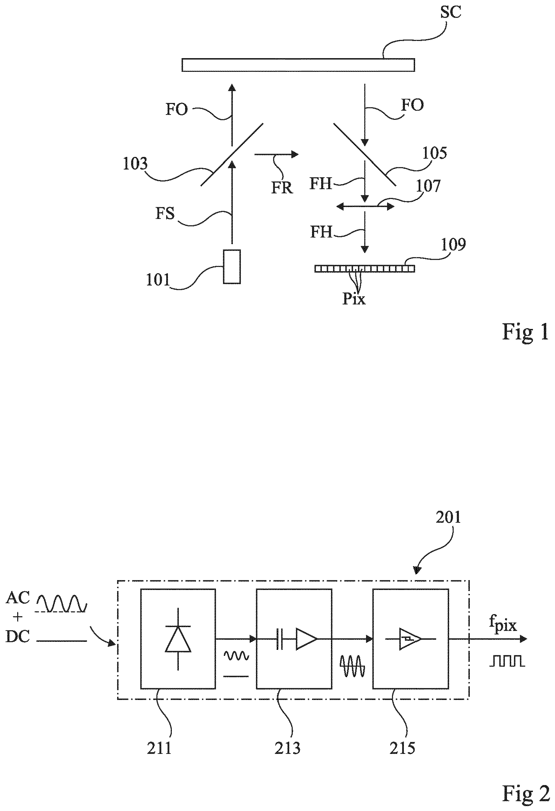

La figure 1 représente de façon très simplifiée un exemple d'un système d'imagerie active selon un mode de réalisation.

Le système de la figure 1 comprend une source 101 de lumière cohérente, par exemple une source laser, adaptée à émettre un faisceau cohérent FS. La source 101 est par exemple une source d'émission infrarouge. Le système de la figure 1 comprend en outre un séparateur optique 103 adapté à diviser le faisceau FS en un faisceau objet FO et un faisceau de référence FR. Le faisceau objet FO est projeté sur une scène SC dont on souhaite acquérir une image de profondeur. Le système de la figure 1 comprend de plus un combineur optique 105 adapté à superposer spatialement le faisceau objet FO réfléchi ou rétrodiffusé par la scène SC, et le faisceau de référence FR non déformé par la scène, de manière à obtenir un faisceau recombiné FH, aussi appelé faisceau hétérodyne. Le système de la figure 1 comprend de plus un capteur d'images 109 comprenant une pluralité de pixels Pix, sur lequel est projeté le faisceau recombiné FH. Pour cela, le système d'imagerie peut comprendre un système optique 107 disposé entre le combineur 105 et le capteur d'images 109, adapté à focaliser le faisceau recombiné FH sur le capteur d'images 109. A titre de variante, le système combineur 105 peut être disposé entre le système optique 107 et le capteur d'images 109.

La fréquence optique de la source lumineuse 101 est modulée selon une loi prédéfinie, par exemple une loi continue, par exemple une loi linéaire périodique. Autrement dit, la fréquence optique de la source 101 varie temporellement selon ladite loi prédéfinie.

Le capteur 109 comprend une pluralité de pixels Pix, par exemple identiques aux dispersions de fabrication près, par exemple agencés en matrice. Chaque pixel reçoit une portion du faisceau recombiné FH correspondant à un point de la scène à imager. Le signal lumineux reçu par chaque pixel varie en intensité de façon périodique selon une fréquence de battement fB égale à la différence de fréquence optique entre le faisceau de référence FR et la portion du faisceau objet FO vue par le pixel. La fréquence de battement fB est représentative du retard entre le faisceau de référence et le faisceau objet, et donc de la distance ou profondeur du point de la scène vu par le pixel. A titre d'exemple, la fréquence de battement fB est comprise entre 0 et 1000 kHz, par exemple entre 0 et 10 kHz.

Chaque pixel Pix comprend un photodétecteur, par exemple une photodiode, un microbolomètre, ou tout autre détecteur sensible au rayonnement émis par la source 101, et un circuit de détection de la fréquence de battement fB de la portion du faisceau recombiné FH reçue par le photodétecteur du pixel. Autrement dit, chaque pixel Pix est adapté à déterminer la fréquence d'oscillation d'un signal lumineux incident variant de façon périodique en intensité.

La figure 2 représente de façon schématique, sous forme de blocs, une partie des circuits d'un pixel Pix du capteur d'images 109 du système de la figure 1. Plus particulièrement, la figure 2 illustre une chaîne 201 de réception analogique et de numérisation du signal du pixel Pix.

La chaîne de réception 201 comprend un photodétecteur 211, par exemple une photodiode, adapté à convertir un signal lumineux reçu par le pixel en un signal électrique, par exemple un courant ou une tension.

Comme cela a été représenté de façon schématique sur la figure, le signal lumineux incident reçu par le photodétecteur 211 comprend une composante continue DC résultant notamment de la luminosité ambiante et de l'oscillateur local, et une composante alternative AC résultant du battement du faisceau hétérodyne recombiné FH. Le signal électrique de sortie du photodétecteur 211 comprend également une composante continue correspondant à la composante continue DC du signal lumineux incident, et une composante alternative périodique correspondant à la composante alternative AC du signal lumineux incident.

Dans l'exemple de la figure 2, la chaîne de réception 201 du pixel Pix comprend en outre un circuit d'amplification et de filtrage 213 adapté à amplifier la composante alternative du signal électrique de sortie du photodétecteur 211 et à filtrer (bloquer) la composante continue de ce signal.

Dans cet exemple, la chaîne de réception 201 comprend en outre un comparateur 215 adapté à convertir le signal de sortie du circuit 213 en un signal numérique ou signal binaire périodique fₚᵢₓ, par exemple une tension périodique en créneaux, de fréquence égale à la fréquence de la composante alternative AC du signal lumineux incident, afin de faciliter la détermination de ladite fréquence par des circuits de traitement numérique.

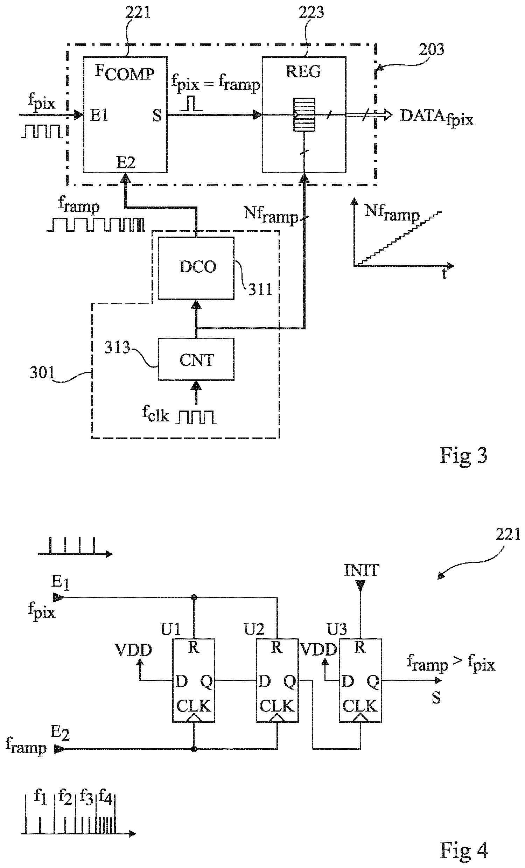

La figure 3 représente de façon schématique, sous forme de blocs, une autre partie des circuits du capteur d'images du système de la figure 1. La figure 3 représente en particulier une chaîne de traitement numérique 203 d'un pixel Pix du capteur, et des circuits périphériques de contrôle des pixels Pix du capteur.

Selon un aspect d'un mode de réalisation, dans chaque pixel Pix, la chaîne de traitement numérique 203 du pixel comprend un comparateur de fréquence 221 (F_{COMP}).

Le comparateur de fréquence comprend un premier noeud d'entrée E1 recevant le signal fₚᵢₓ dont on cherche à déterminer la fréquence, et un deuxième noeud d'entrée E2 recevant un signal alternatif de référence fᵣₐₘₚ de fréquence variable.

Le signal fᵣₐₘₚ est par exemple un signal numérique périodique de même forme et de même amplitude que le signal fₚᵢₓ, par exemple une tension périodique en créneaux. La fréquence du signal fᵣₐₘₚ varie, par exemple par paliers, suivant une loi prédéfinie, par exemple selon une loi croissante, par exemple linéaire. A titre d'exemple, la fréquence du signal fᵣₐₘₚ varie entre une fréquence minimale et une fréquence maximale prédéfinies.

Le comparateur de fréquence 221 comprend en outre un noeud S de fourniture d'un signal de sortie, par exemple un signal binaire. Le signal de sortie du comparateur 221 change d'état lorsque la fréquence du signal fᵣₐₘₚ atteint la fréquence du signal fₚᵢₓ. A titre d'exemple, le signal de sortie du comparateur 221 est à un premier état, par exemple un état bas, tant que la fréquence du signal fᵣₐₘₚ est inférieure à la fréquence du signal fₚᵢₓ, et passe à un deuxième état, par exemple un état haut, lorsque la fréquence du signal fᵣₐₘₚ dépasse la fréquence du signal fₚᵢₓ. Ce changement d'état est détecté par le pixel qui mémorise une valeur représentative de la fréquence du signal fᵣₐₘₚ au moment de la commutation du signal de sortie du comparateur 221. Cette valeur est représentative de la fréquence du signal fₚᵢₓ, et donc de la profondeur du point de la scène vu par le pixel, et définit une valeur de sortie DATA_{fpix} du pixel.

Dans l'exemple de la figure 3, le signal fᵣₐₘₚ est généré par un circuit périphérique 301 externe aux pixels Pix. Le capteur comprend par exemple un unique circuit 301 commun à tous les pixels Pix du capteur. Ainsi, le même signal fᵣₐₘₚ peut être appliqué simultanément à tous les pixels Pix du capteur.

Dans cet exemple, le circuit 301 comprend un oscillateur 311 contrôlé numériquement ou DCO (de l'anglais Digital Controlled Oscillator), fournissant le signal fᵣₐₘₚ.

Le circuit 301 comprend en outre un compteur 313 incrémenté à chaque période d'un signal d'horloge périodique de fréquence constante f_{clk}. La valeur N_{framp} du compteur est appliquée en entrée de l'oscillateur 311 et définit la fréquence du signal de sortie fᵣₐₘₚ de l'oscillateur. Ainsi, à chaque période du signal d'horloge f_{clk}, la fréquence du signal fᵣₐₘₚ est incrémentée.

Le signal numérique N_{framp} de sortie du compteur 311 est en outre transmis à tous les pixels Pix du capteur, en parallèle du signal fᵣₐₘₚ.

La réalisation de l'oscillateur à commande numérique 311 est à la portée de la personne du métier et ne sera pas détaillée ici. Un exemple de réalisation d'un tel oscillateur est par exemple décrit dans l'article intitulé "A Low-Power Digitally Controlled Oscillator for All Digital Phase-Locked Loops" (Jun, Zhao & Yong-Bin, Kim. (2010). VLSI Design. 2010. 10.1155/2010/946710.). Les modes de réalisation décrits ne se limitent toutefois pas à cet exemple particulier.

Dans cet exemple, dans chaque pixel, la chaîne de traitement numérique 203 du pixel comprend un registre de mémorisation 223 (REG) dont un port d'entrée reçoit le signal N_{framp} de sortie du compteur 313. Le registre 223 est contrôlé par le signal de sortie du comparateur 221. Ainsi, lorsque la sortie du comparateur du pixel change d'état, c'est-à-dire lorsque la fréquence du signal fᵣₐₘₚ dépasse la fréquence du signal fₚᵢₓ détecté par le pixel, la valeur courante du signal N_{framp} est mémorisée dans le registre 223 du pixel. Cette valeur définit la valeur de sortie DATA_{fpix} du pixel.

La figure 4 représente plus en détail un exemple de réalisation du comparateur de fréquence 221 de la figure 3.

Dans cet exemple, le comparateur de fréquence 221 comprend trois bascules de type D U1, U2 et U3. Chacune des bascules U1, U2 et U3 comprend un noeud d'entrée D, un noeud de sortie Q, un noeud de réinitialisation R, et un noeud CLK d'application d'un signal d'horloge ou signal de déclenchement.

La bascule U1 a son noeud d'entrée D relié, par exemple connecté, à un noeud d'application d'un potentiel de référence haut VDD, correspondant par exemple à un état logique '1'.

La bascule U1 a son noeud de sortie Q relié, par exemple connecté, au noeud d'entrée D de la bascule U2.

La bascule U2 a son noeud de sortie Q relié, par exemple connecté, au noeud de déclenchement CLK de la bascule U3.

La bascule U3 a son noeud d'entrée D relié, par exemple connecté, au noeud VDD.

Les bascules U1 et U2 ont leurs noeuds de réinitialisation R reliés, par exemple connectés, à un noeud d'application du signal fₚᵢₓ, correspondant au noeud d'entrée E1 du comparateur.

Les bascules U1 et U2 ont leurs noeuds de déclenchement CLK reliés, par exemple connectés, à un noeud d'application du signal fᵣₐₘₚ, correspondant au noeud d'entrée E2 du comparateur.

La bascule U3 a son noeud de réinitialisation R relié, par exemple connecté, à un noeud d'application d'un signal d'initialisation INIT du comparateur.

La bascule U3 a son noeud de sortie Q relié, par exemple connecté, à un noeud de fourniture d'un signal binaire de sortie du comparateur, correspondant au noeud de sortie S du comparateur.

Le signal fᵣₐₘₚ est généré par paliers de fréquence croissante (f1, f2, f3, f4, etc.), avec une durée déterminée par palier, par exemple une durée constante, qui définit un cycle de mesure. Le signal fᵣₐₘₚ commande les entrées d'horloge CLK des deux premières bascules U1 et U2, et le signal fₚᵢₓ commande les entrées de mise à zéro (R) des deux premières bascules U1 et U2.

Lorsque la fréquence du signal fᵣₐₘₚ est supérieure à la fréquence du signal fₚᵢₓ, il y a, pendant le cycle de mesure, un moment où, entre deux impulsions consécutives du signal fᵣₐₘₚ, il n'y a pas de remise à zéro des bascules U1 et U2 par le signal fₚᵢₓ. La sortie Q de la bascule U2 passe alors à l'état haut. Cet état est mémorisé par la bascule U3 et transmis sur le noeud de sortie Q de la bascule U3. Le signal INIT permet la réinitialisation de la mesure.

Les modes de réalisation décrits ne se limitent pas à cet exemple particulier de réalisation du comparateur de fréquence 221.

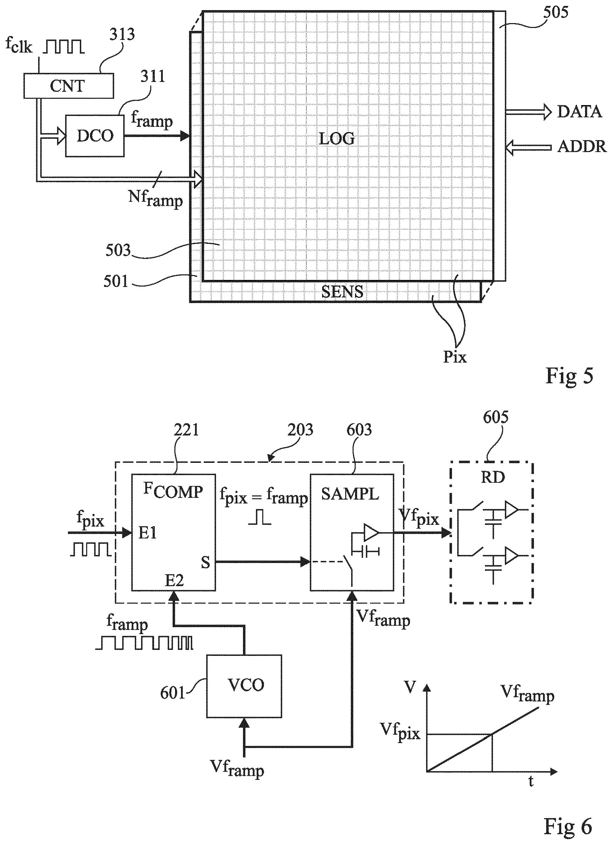

La figure 5 est une vue d'ensemble très schématique des circuits du capteur d'images 109 du système de la figure 1.

Comme l'illustre la figure 5, le compteur 313 et l'oscillateur 311 sont communs à tous les pixels de la matrice de pixels Pix.

La matrice de pixels Pix est par exemple composée de deux couches de circuits intégrés différentes 501 (SENS) et 503 (LOG) superposées, par exemple assemblées et connectées électriquement l'une à l'autre par collage hybride, ou réalisées en technologie 3D séquentielle. La couche 501 comprend par exemple la chaîne de réception analogique 201 des pixels Pix, comportant notamment les photodétecteurs 211 des pixels. La couche 503 comprend par exemple la chaîne de traitement numérique 203 des pixels Pix, comprenant notamment les comparateurs de fréquence 221 des pixels.

Le capteur 109 peut en outre comprendre un circuit de d'adressage et de lecture 505 relié à un bus de sortie de données DATA et à un bus d'entrée d'adresses ADDR, permettant de lire les registres 223 de la matrice de pixels Pix de façon similaire à un circuit mémoire intégré.

Le circuit d'adressage et de lecture 505 est par exemple intégré dans la couche de circuits intégrés 503. L'oscillateur 311 et le compteur 313 (circuits périphériques 301 de la figure 3) peuvent également être intégrés dans la couche 503.

La figure 6 représente de façon schématique, sous forme de blocs, une partie des circuits du capteur d'images du système de la figure 1 selon une première variante de réalisation.

Dans cette première variante, l'oscillateur à commande numérique 311 (figure 3) est remplacé par un oscillateur à commande en tension 601 ou VCO (de l'anglais "Voltage Controlled Oscillator").

La rampe de commande numérique N_{framp} fournie par le compteur 313 (figure 3) est remplacée par une rampe de tension croissante V_{framp}, par exemple linéaire. Le circuit de mémorisation numérique 223 (figure 3) est quant à lui remplacé par un circuit de mémorisation analogique 603, par exemple un échantillonneur bloqueur.

Le fonctionnement est similaire à ce qui a été décrit ci-dessus en relation avec la figure 3, à la différence près que, dans la variante de la figure 6, la grandeur à mémoriser lors du basculement du signal de sortie du comparateur 221 est la valeur V_{fpix} de la tension de consigne V_{framp} de l'oscillateur 601 au moment de la commutation du signal de sortie du comparateur 221. Cette valeur définit la valeur de sortie du pixel. Le circuit de mémorisation 603 comprend par exemple un élément capacitif, par exemple un condensateur, et un interrupteur commandé par le signal de sortie du comparateur 221 pour échantillonner la valeur de la tension V_{framp} dans l'élément capacitif lors de la commutation du comparateur 221.

La tension V_{fpix}, représentative de la fréquence du signal fₚᵢₓ, peut ensuite être lue, par exemple au moyen d'un circuit de lecture 605 (RD) situé au pied de chaque colonne de la matrice de pixels Pix, par exemple par une méthode de lecture similaire à celle d'un capteur d'images en technologie CMOS. A titre d'exemple, non limitatif, le circuit de lecture 605 est un circuit à échantillonnage double, qui permet par exemple de s'affranchir des dispersions de fabrication, et notamment de tension de seuil, d'un transistor suiveur de tension du circuit 603. Une fois lue par le circuit 605, la valeur V_{fpix} peut être numérisée pour être exploitée par le système d'acquisition.

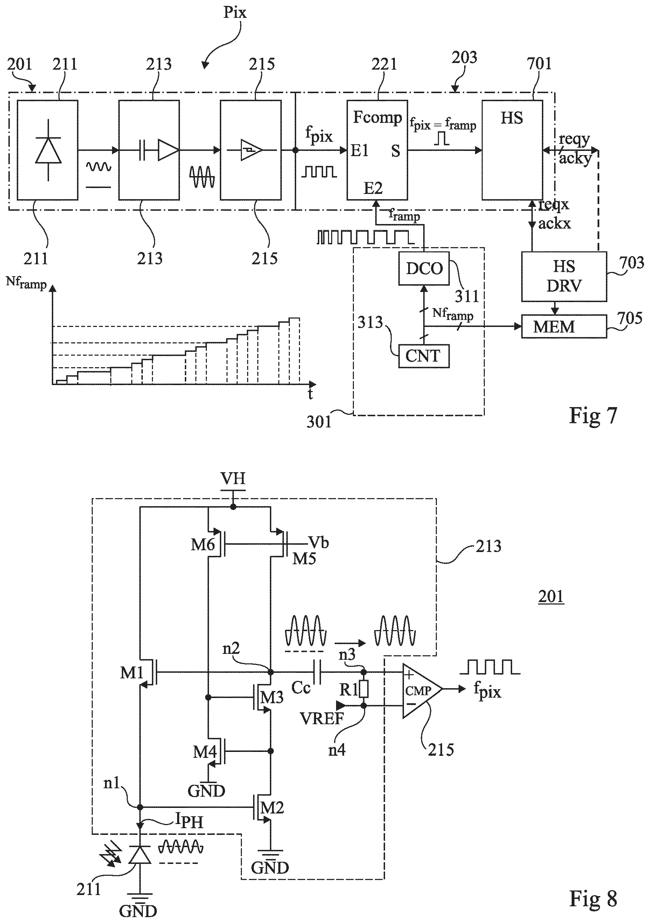

La figure 7 représente de façon schématique, sous forme de blocs, une partie des circuits du capteur d'images du système de la figure 1 selon une deuxième variante de réalisation.

Dans cette deuxième variante, le capteur présente une architecture basée sur la détection d'évènements. Dans cette architecture, la matrice de pixels est lue de façon non séquentielle au fur et à mesure des évènements, un évènement correspondant à la commutation du comparateur de fréquence 221 dans un pixel Pix de la matrice.

Pour cela, dans chaque pixel Pix, le registre de mémorisation 223 (figure 3) est remplacé par un circuit 701 (HS) de gestion de dialogue (handshake en anglais). Celui-ci gère la communication avec la périphérie afin d'éviter des conflits lorsque plusieurs évènements se produisent simultanément. A titre d'exemple, lorsque le comparateur 221 d'un pixel commute (lorsque la fréquence du signal fᵣₐₘₚ dépasse la fréquence du signal fₚᵢₓ), le circuit 701 du pixel émet un signal reqy de requête d'acquittement de ligne sur une piste conductrice de ligne de la matrice de pixels. Cette requête est reçue par un circuit de traitement 703 (HS DRV) externe à la matrice de pixels. Le circuit 703 émet en retour un signal d'acquittement de ligne acqy sur une piste conductrice de ligne de la matrice de pixels. A réception de ce signal, le circuit 701 du pixel émet un signal reqx de requête d'acquittement de colonne sur une piste conductrice de colonne de la matrice de pixels. Cette requête est reçue par le circuit 703 qui émet en retour un signal d'acquittement de colonne acqx sur une piste conductrice de colonne de la matrice de pixel. A réception de ce signal, le circuit 701 du pixel bloque toute nouvelle requête jusqu'à ce qu'un signal d'initialisation soit envoyé à nouveau au pixel. La chaîne de réception analogique 201 du pixel Pix peut en outre être mise en veille jusqu'à la réception du signal d'initialisation, de façon à limiter la consommation électrique du capteur. A partir des signaux de requête reqy et reqx, le circuit externe 703 peut décoder l'adresse du pixel Pix ayant déclenché l'évènement. Cette adresse, ainsi que la valeur N_{framp} du compteur 313 au moment de la détection de l'évènement (représentative de fréquence du signal fₚᵢₓ lu par le pixel), peuvent être stockées dans un circuit mémoire 705 (MEM) externe à la matrice de pixels.

Le fonctionnement et la réalisation des circuits 701 et 703 de gestion des dialogues ne seront pas décrits plus en détail ci-après, la réalisation de ces circuits étant à la portée de la personne du métier à partir des indications de la présente description. En particulier, cette deuxième variante est compatible avec les circuits usuels de gestion de dialogue dans les capteurs évènementiels ou asynchrones connus, par exemple des circuits du type décrit dans la demande de brevet FR3109667 précédemment déposée par le demandeur.

Hormis le mode de lecture événementiel qui diffère du mode de lecture synchrone de l'exemple de la figure 3, le fonctionnement du capteur de la figure 7 est similaire à ce qui a été décrit précédemment en relation avec les figures 1 à 5, à la différence près que, dans l'exemple de la figure 7, le temps de lecture pour chaque palier de fréquence du signal fᵣₐₘₚ n'est pas constant. Plus particulièrement, à chaque palier, la valeur N_{framp} du compteur 313 doit rester fixe jusqu'à ce que ce que tous les pixels Pix ayant généré un évènement à ce palier de fréquence aient été décodés.

On obtient ainsi une série d'adresses de pixels pour chaque palier de fréquence du signal fᵣₐₘₚ. Ces adresses sont stockées dans le circuit mémoire 705, avec la valeur de consigne de fréquence N_{framp} correspondante.

Un avantage de la variante de la figure 7 est qu'elle permet de réduire la complexité des circuits internes aux pixels Pix de la matrice, et ainsi favoriser la densité d'intégration des pixels. En effet, le bloc logique 701 de gestion des dialogues requiert une logique combinatoire avec un nombre de composants limité, par exemple de l'ordre de trente transistors par pixel, inférieur au nombre de composants du circuit de mémorisation 223 (REG) de l'exemple de la figure 3.

Un autre avantage est qu'il n'est pas nécessaire de convoyer le signal N_{framp} de sortie du compteur 313 au sein de la matrice de pixels, mais seulement vers le circuit mémoire 705. Là encore, ceci permet d'améliorer la densité d'intégration de la matrice de pixels. En outre, ceci permet de réduire significativement la consommation électrique.

Etant donné que les pixels sont lus dans l'ordre croissant par rapport à leur valeur de fréquence (et donc de distance), il est possible de régler la rampe de fréquence pour, par exemple, détecter uniquement les pixels dans une gamme de distances prédéfinie, voire à une seule distance prédéfinie. Dans ce cas, les pixels en dehors de la gamme visée ne seront pas lus, ce qui permet d'augmenter la vitesse de lecture et de réduire la consommation électrique.

Par ailleurs, du fait du mode de lecture par ordre croissant de distances, un histogramme peut être directement généré lors de la lecture, de façon à donner un aperçu de la distribution de la scène. Pour cela, on peut prévoir de compter le nombre de pixels lus à chaque palier de fréquence, et stocker le résultat dans le circuit mémoire 705. Cette information peut être utilisée pour, par exemple, réajuster la rampe de fréquences, c'est-à-dire la valeur du compteur N_{framp} et/ou la durée des paliers, ou bien pour rétroagir sur la source lumineuse du système, par exemple en modifiant la fréquence optique du rayonnement émis, afin d'obtenir une meilleure résolution de l'image de profondeur.

La figure 8 représente plus en détail un exemple de réalisation de la chaîne de traitement de réception 201 (figure 2) d'un pixel Pix d'un capteur d'images selon un mode de réalisation.

Dans cet exemple, le photodétecteur 211 est une photodiode polarisée afin de transformer le signal photonique reçu en courant, lequel est converti en tension afin de pouvoir extraire la composante AC, qui sera traitée ultérieurement pour déterminer la fréquence de battement du faisceau hétérodyne reçu par le pixel afin de reconstruire une cartographie de profondeur ou image 3D de la scène.

Dans cet exemple, la photodiode 211 a son anode reliée, par exemple connectée, à un noeud GND d'application d'un potentiel de référence bas, par exemple la masse.

Dans cet exemple, le circuit de filtrage et d'amplification 213 comprend six transistors M1, M2, M3, M4, M5 et M6. A titre d'exemple les transistors M1, M2, M3 et M4 sont des transistors MOS à canal N, et les transistors M5 et M6 sont des transistors MOS à canal P.

Le transistor M1 a sa source reliée, par exemple connectée, à la cathode de la photodiode 211 (noeud n1 sur la figure) et son drain relié, par exemple connecté, à un noeud d'application d'un potentiel de référence haut VH. Le transistor M2 a sa source reliée, par exemple connectée, au noeud GND et son drain relié, par exemple connecté, à la source du transistor M3. Le transistor M3 a son drain relié, par exemple connecté, au drain du transistor M5. Le transistor M5 a sa source reliée, par exemple connectée, au noeud VH. Le transistor M4 a sa source reliée, par exemple connectée, au noeud GND, et son drain relié, par exemple connecté, au drain du transistor M6. Le transistor M6 a sa source reliée, par exemple connectée, au noeud VH.

La grille du transistor M1 est reliée, par exemple connectée, au point milieu entre les transistors M3 et M5, c'est-à-dire au drain du transistor M3 et au drain du transistor M5 (noeud n2 sur la figure). La grille du transistor M2 est reliée, par exemple connectée, au noeud n1. La grille du transistor M3 est reliée, par exemple connectée, au point milieu entre les transistors M4 et M6, c'est-à-dire au drain du transistor M4 et au drain du transistor M6. La grille du transistor M4 est reliée, par exemple connectée, au point milieu entre les transistors M2 et M3, c'est-à-dire au drain du transistor M2 et à la source du transistor M3. Dans cet exemple, les grilles des transistors M5 et M6 sont reliées, par exemple connectées, à un noeud d'application d'un potentiel de polarisation Vb. Les transistors M5 et M6 forment ainsi deux sources de courant destinées à polariser respectivement la branche comprenant les transistors M2 et M3 et la branche comprenant le transistor M4.

Dans l'exemple de la figure 8, le circuit 213 comprend en outre un élément capacitif de découplage Cc, par exemple un condensateur, ayant une première électrode reliée, par exemple connectée, au noeud n2, et une deuxième électrode reliée, par exemple connectée, à un noeud n3. Le circuit 213 comprend en outre un élément résistif R1 de résistance fixe, par exemple une résistance ou un transistor MOS monté en diode, ayant une première extrémité reliée, par exemple connectée, au noeud n3 et une deuxième extrémité reliée, par exemple connectée, à un noeud n4. En fonctionnement, le noeud n4 reçoit un potentiel de référence VREF.

Dans cet exemple, le comparateur de tension 215 (CMP) a une première entrée ou entrée positive (+) reliée, par exemple connectée, au noeud n3, et une deuxième entrée ou entrée négative (-) reliée, par exemple connectée, au noeud n4.

Le photocourant I_{PH} généré par la photodiode 211 sur le noeud n1 est converti en tension et amplifié sur le noeud n2. L'élément capacitif de découplage Ce permet de filtrer la composante continue du signal amplifié fourni sur le noeud n2. L'élément résistif R1 permet de polariser la borne d'entrée positive (+) du comparateur 215 à la tension VREF, autour de laquelle la composante alternative du signal amplifié va évoluer sur le noeud n3. La même tension VREF sert de référence au comparateur pour effectuer l'opération de quantification sur 1 bit par le comparateur 215.

La tension alternative binaire de sortie fₚᵢₓ de la chaîne 201 est fournie sur un noeud de sortie du comparateur 215.

Plus généralement, la personne du métier saura prévoir d'autres implémentations de la chaîne de réception analogique 201 des pixels Pix du capteur, et en particulier du circuit 213 d'amplification et de filtrage du signal de sortie des photodétecteurs des pixels, par exemple des implémentations du type décrit dans l'article intitulé "A Dynamic Vision Sensor With 1% Temporal Contrast Sensitivity and In-Pixel Asynchronous Delta Modulator for Event Encoding" de M. Yang, S. -C. Liu et T. Delbruck (IEEE Journal of Solid-State Circuits, vol. 50, no. 9, pp. 2149-2160, Sept. 2015).

Divers modes de réalisation et variantes ont été décrits. La personne du métier comprendra que certaines caractéristiques de ces divers modes de réalisation et variantes pourraient être combinées, et d'autres variantes apparaîtront à la personne du métier. En particulier, bien que l'on ait décrit ci-dessus uniquement des exemples de réalisation dans lesquels la fréquence du signal fᵣₐₘₚ appliquée sur l'entrée E2 du comparateur de fréquence 221 varie selon une loi croissante, les modes de réalisation décrits ne se limitent pas à ce cas particulier. Plus généralement, la fréquence du signal fᵣₐₘₚ peut varier selon toute autre loi, de préférence monotone, par exemple une loi décroissante.

En outre, bien que l'on ait décrit ci-dessus des exemples de réalisation dans lesquels chaque pixel Pix du capteur d'images 109 comprend un circuit de détection d'une fréquence de battement d'une portion d'un faisceau hétérodyne reçue par le photodétecteur élémentaire du pixel, les modes de réalisation décrits ne se limitent pas à ce cas particulier. A titre de variante, une partie ou la totalité du circuit de détection de la fréquence de battement peut être déportée en dehors du pixel, par exemple en pied de colonne dans le cas d'un capteur matriciel. En particulier, dans les exemples des figures 2, 3 et 6, la chaîne de traitement numérique et notamment le comparateur de fréquence 221 peuvent être communs à tous les pixels d'une même colonne. De façon similaire, les circuits d'amplification 213 et de quantification sur 1-bit 215 peuvent être mutualisés par colonne. Ceci permet de réduire la taille des pixels et ainsi d'augmenter la densité d'intégration des pixels. La lecture du capteur est alors une lecture à obturation déroulante ("rolling shutter" en anglais), ligne par ligne.

Enfin, la mise en oeuvre pratique des modes de réalisation et variantes décrits est à la portée de la personne du métier à partir des indications fonctionnelles données ci-dessus.

## Revendications

1. Capteur d'images (109) comprenant une pluralité de pixels (Pix) comprenant chacun un photodétecteur élémentaire (211), le capteur comprenant, pour chaque pixel (Pix), un circuit (201, 203) de détection d'une fréquence de battement d'une portion d'un faisceau hétérodyne reçue par le photodétecteur élémentaire (211) du pixel, le circuit de détection (201, 203) comprenant un comparateur de fréquence (221) comprenant un premier noeud d'entrée (E1) recevant un premier signal alternatif périodique (fₚᵢₓ) de fréquence égale à ladite fréquence de battement, un deuxième noeud d'entrée (E2) recevant un deuxième signal alternatif (fᵣₐₘₚ) de fréquence variable, et un noeud de sortie (S) fournissant un signal de sortie commutant d'un premier état à un deuxième état lorsque la fréquence du deuxième signal (fᵣₐₘₚ) dépasse la fréquence du premier signal (fₚᵢₓ).

2. Capteur d'images (109) selon la revendication 1, comprenant un circuit (301 ; 601) de génération du deuxième signal (fᵣₐₘₚ), commun à tous les pixels (Pix) du capteur.

3. Capteur d'images (109) selon la revendication 2, dans lequel le circuit (301) de génération du deuxième signal (fᵣₐₘₚ) comprend un oscillateur à commande numérique (311) fournissant le deuxième signal (fᵣₐₘₚ), et un compteur numérique (313) générant un signal (N_{framp}) de commande de l'oscillateur à commande numérique (311).

4. Capteur d'images (109) selon la revendication 3, comprenant, pour chaque pixel (Pix), un registre numérique (223) commandé par le signal de sortie du comparateur de fréquence (221) du pixel et configuré pour mémoriser la valeur du signal (N_{framp}) de commande de l'oscillateur à commande numérique (311) lors de la commutation du signal de sortie du comparateur de fréquence (221) du pixel.

5. Capteur d'images (109) selon la revendication 4, comprenant en outre un circuit (505) d'adressage et de lecture des registres numériques (223) des pixels (Pix).

6. Capteur d'images (109) selon la revendication 3, dans lequel chaque pixel comprend un circuit un circuit (201, 203) de détection de ladite fréquence de battement, le capteur comprenant des circuits (701, 703) de détection évènementielle des commutations des signaux de sortie des comparateurs de fréquence (221) des pixels, lesdits circuits étant configurés pour, à chaque commutation du signal de sortie du comparateur de fréquence (221) d'un pixel (Pix), décoder l'adresse du pixel (Pix) dans lequel la commutation s'est produite, et écrire dans un circuit mémoire (705) ladite adresse ainsi que la valeur du signal (N_{framp}) de commande de l'oscillateur à commande numérique (311) au moment de la commutation.

7. Capteur d'images (109) selon la revendication 2, dans lequel le circuit de génération du deuxième signal (fᵣₐₘₚ) comprend un oscillateur à commande en tension (601) fournissant le deuxième signal (fᵣₐₘₚ), et un circuit de génération d'une tension (V_{framp}) de commande de l'oscillateur (601) à commande en tension.

8. Capteur d'images (109) selon la revendication 7, comprenant, pour chaque pixel (Pix), un circuit d'échantillonnage (603) commandé par le signal de sortie du comparateur de fréquence (221) et configuré pour mémoriser la valeur de la tension (V_{framp}) de commande de l'oscillateur à commande en tension (601) lors de la commutation du signal de sortie du comparateur de fréquence (221).

9. Capteur d'images (109) selon l'une quelconque des revendications 1 à 8, comprenant, pour chaque pixel (Pix), un circuit (213) d'amplification et de filtrage d'un signal électrique fourni par le photodétecteur (211) du pixel, et un circuit (215) de quantification sur 1-bit d'une composante alternative d'un signal de sortie du circuit d'amplification et de filtrage (213), ledit circuit (215) de quantification fournissant le premier signal alternatif périodique (fₚᵢₓ) appliqué sur le premier noeud d'entrée (E1) du comparateur de fréquence (221) du pixel.

10. Système d'imagerie comprenant :
- un capteur d'images (109) selon l'une quelconque des revendications 1 à 9 ;
- une source laser (101) configurée pour émettre un faisceau lumineux (FS) modulé en fréquence ;
- un séparateur optique (103) configuré pour séparer le faisceau laser (FS) émis par la source (101) en un faisceau de référence (FR) et un faisceau objet (FO) dirigé vers une scène (SC) à analyser ; et
- un montage optique (105, 107) configuré pour projeter ou acheminer sur le capteur d'images (109) un faisceau recombiné (FH) formé par la superposition du faisceau de référence (FR) et du faisceau objet (FO) réfléchi par la scène (SC).

## Patentansprüche

1. Bildsensor (109), der eine einer Vielzahl von Pixeln (Pix) aufweist, die jeweils einen elementaren Photodetektor (211) aufweisen, wobei der Sensor für jedes Pixel (Pix) eine Schaltung (201, 203) zum Detektieren einer Schwebungsfrequenz eines Teils eines Überlagerungsstrahls aufweist, der von dem elementaren Photodetektor (211) des Pixels empfangen wird, wobei die Schaltung (201, 203) zum Detektieren einen Frequenzkomparator (221) aufweist, der einen ersten Eingangsknoten (E1) aufweist, der ein erstes periodisches Wechselstromsignal (fₚᵢₓ) mit einer Frequenz gleich der Schwebungsfrequenz empfängt, einen zweiten Eingangsknoten (E2) aufweist, der ein zweites Wechselstromsignal (fᵣₐₘₚ) mit variabler Frequenz empfängt, und einen Ausgangsknoten (S) aufweist, der ein Ausgangssignal liefert, das von einem ersten Zustand in einen zweiten Zustand wechselt, wenn die Frequenz des zweiten Signals (fᵣₐₘₚ) die Frequenz des ersten Signals (fₚᵢₓ) überschreitet.

2. Bildsensor (109) nach Anspruch 1, der eine Schaltung (301; 601) zum Erzeugen des zweiten Signals (fᵣₐₘₚ) aufweist, das allen Pixeln (Pix) des Sensors gemeinsam ist.

3. Bildsensor (109) nach Anspruch 2, wobei die Schaltung (301) zum Erzeugen des zweiten Signals (fᵣₐₘₚ) einen digital gesteuerten Oszillator (311), der das zweite Signal (fᵣₐₘₚ) liefert, und einen digitalen Zähler (313) aufweist, der ein Signal (N_{framp}) zum Steuern des digital gesteuerten Oszillators (311) erzeugt.

4. Bildsensor (109) nach Anspruch 3, der für jedes Pixel (Pix) ein digitales Register (223) aufweist, das durch das Ausgangssignal des Frequenzkomparators (221) des Pixels gesteuert wird und eingerichtet ist, den Wert des Steuersignals (N_{framp}) des digital gesteuerten Oszillators (311) beim Wechseln des Ausgangssignals des Frequenzkomparators (221) des Pixels zu speichern.

5. Bildsensor (109) nach Anspruch 4, der ferner eine Schaltung (505) zum Adressieren und Lesen aus den digitalen Registern (223) der Pixel (Pix) aufweist.

6. Bildsensor (109) nach Anspruch 3, wobei jedes Pixel eine Schaltung (201, 203) zum Detektieren der Schwebungsfrequenz aufweist, wobei der Sensor Schaltungen (701, 703) zur ereignisbasierten Detektion der Wechsel der Ausgangssignale der Frequenzkomparatoren (221) der Pixel aufweist, wobei die Schaltungen eingerichtet sind, bei jedem Wechsel des Ausgangssignals des Frequenzkomparators (221) eines Pixels (Pix) die Adresse des Pixels (Pix) zu dekodieren, bei dem der Wechsel aufgetreten ist, und diese Adresse sowie den Wert des Steuersignals (N_{framp}) des digital gesteuerten Oszillators (311) zum Zeitpunkt des Wechselns in eine Speicherschaltung (705) zu schreiben.

7. Bildsensor (109) nach Anspruch 2, wobei die Schaltung zum Erzeugen des zweiten Signals (fᵣₐₘₚ) einen spannungsgesteuerten Oszillator (601), der das zweite Signal (fᵣₐₘₚ) liefert, und eine Schaltung zum Erzeugen einer Steuerspannung (V_{framp}) des spannungsgesteuerten Oszillators (601) aufweist.

8. Bildsensor (109) nach Anspruch 7, der für jedes Pixel (Pix) eine Abtastschaltung (603) aufweist, die durch das Ausgangssignal des Frequenzkomparators (221) gesteuert wird und eingerichtet ist, den Wert der Steuerspannung (V_{framp}) des spannungsgesteuerten Oszillators (601) beim Wechseln des Ausgangssignals des Frequenzkomparators (221) zu speichern.

9. Bildsensor (109) nach einem der Ansprüche 1 bis 8, der für jedes Pixel (Pix) eine Schaltung (213) zum Verstärken und Filtern eines elektrischen Signals aufweist, das vom Photodetektor (211) des Pixels geliefert wird, und eine Schaltung (215) zur Quantisierung, und zwar über 1 Bit, einer Wechselstromkomponente eines Ausgangssignals der Verstärker- und Filterschaltung (213) aufweist, wobei die Quantisierungsschaltung (215) das erste periodische Wechselstromsignal (fₚᵢₓ) liefert, das an den ersten Eingangsknoten (E1) des Frequenzkomparators (221) des Pixels angelegt wird.

10. Bildgebungssystem, das Folgendes aufweist:
- einen Bildsensor (109) nach einem der Ansprüche 1 bis 9;
- eine Laserquelle (101), die eingerichtet ist, einen frequenzmodulierten Lichtstrahl (FS) zu emittieren;
- einen optischen Teiler (103), der eingerichtet ist, den Laserstrahl (FS), der von der Quelle (101) emittiert wird, in einen Referenzstrahl (FR) und einen Objektstrahl (FO) aufzuteilen, der auf eine zu analysierende Szene (SC) gerichtet ist; und
- eine optische Anordnung (105, 107), die eingerichtet ist, einen rekombinierten Strahl (FH), der durch die Überlagerung des Referenzstrahls (FR) und Objektstrahls (FO) gebildet wird, der von der Szene (SC) reflektiert wird, auf den Bildsensor (109) zu projizieren oder zu übertragen.

## Claims

1. Image sensor (109) comprising a plurality of pixels (Pix) each comprising an elementary photodetector (211), the sensor comprising, for each pixel (Pix), a circuit (201, 203) for detecting a beat frequency of a portion of a heterodyne beam received by the elementary photodetector (211) of the pixel, the detection circuit (201, 203) comprising a frequency comparator (221) comprising a first input node (E1) receiving a first periodic AC signal (fₚᵢₓ) having a frequency equal to said beat frequency, a second input node (E2) receiving a second AC signal (fᵣₐₘₚ) of variable frequency, and an output node (S) delivering an output signal switching from a first state to a second state when the frequency of the second signal (fᵣₐₘₚ) exceeds the frequency of the first signal (fₚᵢₓ).

2. Image sensor (109) according to claim 1, comprising a circuit (301; 601) for generating the second signal (fᵣₐₘₚ), common to all the pixels (Pix) of the sensor.

3. Image sensor (109) according to claim 2, wherein the circuit (301) for generating the second signal (fᵣₐₘₚ) comprises a digitally-controlled oscillator (311) delivering the second signal (fᵣₐₘₚ), and a digital counter (313) generating a signal (N_{framp}) for controlling the digitally-controlled oscillator (311).

4. Image sensor (109) according to claim 3, comprising, for each pixel (Pix), a digital register (223) controlled by the output signal of the frequency comparator (221) of the pixel and configured to store the value of the control signal (N_{framp}) of the digitally-controlled oscillator (311) at the switching of the output signal of the frequency comparator (221) of the pixel.

5. Image sensor (109) according to claim 4, further comprising a circuit (505) for addressing and reading from the digital registers (223) of the pixels (Pix).

6. Image sensor (109) according to claim 3, wherein each pixel comprises a circuit (201, 203) for detecting said beat frequency, the sensor comprising circuits (701, 703) of event-based detection of the switchings of the output signals of the frequency comparators (221) of the pixels, said circuits being configured to, at each switching of the output signal of the frequency comparator (221) of a pixel (Pix), decode the address of the pixel (Pix) where the switching has occurred, and write into a memory circuit (705) said address as well as the value of the control signal (N_{framp}) of the digitally-controlled oscillator (311) at the time of the switching.

7. Image sensor (109) according to claim 2, wherein the circuit for generating the second signal (fᵣₐₘₚ) comprises a voltage-controlled oscillator (601) delivering the second signal (fᵣₐₘₚ), and a circuit for generating a control voltage (V_{framp}) of the voltage-controlled oscillator (601).

8. Image sensor (109) according to claim 7, comprising, for each pixel (Pix), a sampling circuit (603) controlled by the output signal of the frequency comparator (221) and configured to store the value of the control voltage (V_{framp}) of the voltage-controlled oscillator (601) at the switching of the output signal of the frequency comparator (221).

9. Image sensor (109) according to any of claims 1 to 8, comprising, for each pixel (Pix), a circuit (213) for amplifying and filtering an electric signal delivered by the photodetector (211) of the pixel, and a circuit (215) for quantizing over 1 bit an AC component of an output signal of the amplification and filtering circuit (213), said quantization circuit (215) delivering the first periodic AC signal (fₚᵢₓ) applied to the first input node (E1) of the frequency comparator (221) of the pixel.

10. Imaging system comprising:
- an image sensor (109) according to any of claims 1 to 9;
- a laser source (101) configured to emit a frequency-modulated light beam (FS);
- an optical splitter (103) configured to split the laser beam (FS) emitted by the source (101) into a reference beam (FR) and an object beam (FO) directed towards a scene (SC) to be analyzed; and
- an optical assembly (105, 107) configured to project or convey onto the image sensor (109) a recombined beam (FH) formed by the superimposition of the reference beam (FR) and of the object beam (FO) reflected by the scene (SC) .
